# EUROPÄISCHE PATENTSCHRIFT

(11) **EP 0 476 312 B1**
(45) Veröffentlichungstag und Bekanntmachung des Hinweises auf die Patenterteilung: **27.04.1994**
(21) Anmeldenummer: 91113726.3
(22) Anmeldetag: 16.08.1991
(51) Int. Cl.: C04B 7/345, C04B 7/28, B01D 53/34

(54) **Verfahren zur Herstellung von Chlorosilikaten**
Process for production of chlorosilicates
Procédé de production de chlorosilicates

(30) Priorität: 31.08.1990 DE 4027529
(43) Veröffentlichungstag der Anmeldung: 25.03.1992
(73) Patentinhaber: Rheinische Kalksteinwerke GmbH, 42480 Wülfrath (DE)
(72) Erfinder: Roeder, Alfred, Dr.rer.nat.Dipl.Phys., D-4100 Duisburg (DE); Oberste-Padtberg, Rüdiger, Dr.rer.nat., D-5600 Wuppertal 1 (DE); Gruschka, Dietrich, Dipl.-Ing., D-5603 Wülfrath (DE); Opitz, Dieter, Dr. Dipl.-Ing., D-4030 Ratingen 5 (DE)

(56) Entgegenhaltungen:
- EP-A- 0 292 083
- DE-A- 2 924 585
- DE-A- 3 326 935
- DE-C- 3 906 617
- ZEMENT, KALK, GIPS. Bd. 44, Nr. 5, Mai 1991, WIESBADEN DE Seiten 221 - 227; D.ROSE ET AL.: 'Untersuchungen zur adsorptiven und katalytischen Rauchgasreinigung von Zementwerksabgasen'
- CHEMICAL ABSTRACTS, vol. 108, no. 16, Columbus, Ohio, US; abstract no. 136756G, & JA-A-62 283 848 (ISHIKAWAJIMA-HARTMA HEAVY INDUSTRIES CO.) 9 December 1987

## Beschreibung

Die Erfindung betrifft ein Verfahren zur Herstellung eines verwertbaren oder deponiefähigen Produktes mit geringer Eluierbarkeit durch Wasser aus halogenidhaltigen Rückständen aus der Abgasreinigung, bei dem man die halogenidhaltigen Rückstände als Bestandteile eines Rohmehls mit einem CaO/SiO₂-Verhältnis zwischen 1,7 und 3,4 zur Herstellung von Chlorosilikaten einer thermischen Behandlung unterwirft nach Patent DE-C-39 06 617.

Nach dem Hauptpatent DE-C-39 06 617 sollen die mit Wasser auslaugbaren Bestandteile so in eine mineralische Matrix eingebaut werden, daß, verglichen mit unbehandelten halogenidhaltigen Rückständen aus der Abgasreinigung, eine deutlich verringerte Eluierbarkeit erreicht wird. Die Rückstände sollen dabei in ein Produkt überführt werden, welches als hydraulisches Bindemittel Verwendung finden kann.

Es hat sich bei Durchführung des Verfahrens nach dem Hauptpatent nun herausgestellt, daß bei der thermischen Behandlung zur Chlorosilikatherstellung Abgase anfallen, welche gewisse Mengen Halogenide enthalten. Die Menge der bei dem Brennprozeß sich verflüchtigenden Halogenide kann bis zu 10 % des gesamten Halogenidinhaltes in den erzeugten Granalien ausmachen. Diese Menge an flüchtigen Halogeniden stellt die Anwendbarkeit des Verfahrens nach dem Hauptpatent insofern in Frage, weil aufgrund der TA-Luft derart große Mengen Halogenide nicht einfach in die Atmosphäre abgeleitet werden dürfen. Für die Anwendung des Verfahrens wird eine separate Abgasreinigung erforderlich.

Es stellt sich daher die zusätzliche Aufgabe, eine Maßnahme anzugeben, um die bei Durchführung des Verfahrens nach dem Hauptpatent anfallenden halogenidhaltigen Gase derart unschädlich zu machen, daß sie unter Einhaltung der behördlichen Vorschriften in die Atmosphäre abgeleitet werden können.

Zur Lösung dieser Aufgabe wird gemäß der vorliegenden Erfindung vorgeschlagen, daß die bei der thermischen Behandlung zur Chlorosilikatherstellung nach dem eingangs geschilderten Verfahren gemäß dem Hauptpatent DE-C-39 06 617 anfallenden Abgase vorgereinigt und dann der Abgasreinigung einer Müllverbrennungsanlage zugeführt werden und daß die bei der Vorreinigung anfallenden Rückstände dem Rohmehl zugemischt werden. Nach dem erfindungsgemäßen Verfahren werden also aus den Abgasen, die bei der thermischen Behandlung zur Chlorosilikatherstellung nach dem Hauptpatent anfallen, schädliche Bestandteile, insbesondere Halogenide, durch geeignete Verfahren im Zuge einer Vorreinigung als im allgemeinen feste Stoffe abgeschieden, die dann zurückgeführt und dem Rohmehl zugemischt werden. Die insoweit von Schadstoffen vorgereinigten Abgase werden dann der Abgasreinigung der Müllverbrennungsanlage zugeführt, in der diese kleine Abgasmenge zusätzlich zu der Abgasmenge aus der Müllverbrennung von restlichen Schadstoffen soweit befreit wird, daß das erhaltene Reingas den behördlichen Vorschriften entspricht.

Bevorzugt werden die Abgase durch ein Trockensorptionsverfahren unter Verwendung von Kalkhydraten als basisches Reagenz vorgereinigt. Es handelt sich dabei um ein kostengünstiges Verfahren.

Gemäß einer weiteren bevorzugten Ausgestaltung des erfindungsgemäßen Verfahrens sollen in der Vorreinigungsstufe die Rückstände aus den Abgasen vor deren Eintritt in die Abgasreinigung der Müllverbrennungsanlage durch mechanische Filter, wie Schlauchfilter, oder durch Elektrofilter abgetrennt und vollständig dem Rohmehl zugeführt werden.

Weiterhin wird es bevorzugt, daß die Abgase vor ihrem Eintritt in die Vorreinigungsstufe zur Temperaturabsenkung einer Gaskonditionierung unterworfen werden. Dabei wird die Temperaturabsenkung in der Gaskonditionierungsstufe durch Eindüsen von Wasser vorgenommen, denn dies ist die einfachste und kostengünstigste Art der Temperaturabsenkung der zu reinigenden Abgase.

Das erfindungsgemäße Verfahren wird anhand der beigefügten Schemazeichnung im folgenden näher erläutert. Das Rohmehl wird durch Granulierung in einem geeigneten Aggregat stückig gemacht. Die Granalien werden dann gegebenenfalls durch einen Vorwärmer II einem Klinkerbrennofen III zugeführt, der ein im Gegenstrom betriebener Drehofen sein kann. Der Klinker wird dann über einen Kühler IV ausgetragen. Der Ofen I wird mit Wasser zur Granulierung beschickt, der Klinkerbrennofen III wird mit Brennstoff und Luft beschickt und dem Kühler wird Kühlluft zugeführt.

Die während dieser geschilderten thermischen Behandlung entstehenden Abgase werden über die durch gestrichelte und strichpunktierte Linien angedeuteten Wege gegebenenfalls nach Temperaturabsenkung in einer Gaskonditionierungstufe V in einer Vorabscheidung VI vorgereinigt. Die vorgereinigten Abgase werden dann der Abgasreinigung der Müllverbrennungsanlage zugeführt. Die bei der Vorreinigung anfallenden Rückstände werden zurückgeführt und dem Rohmehl zugemischt.

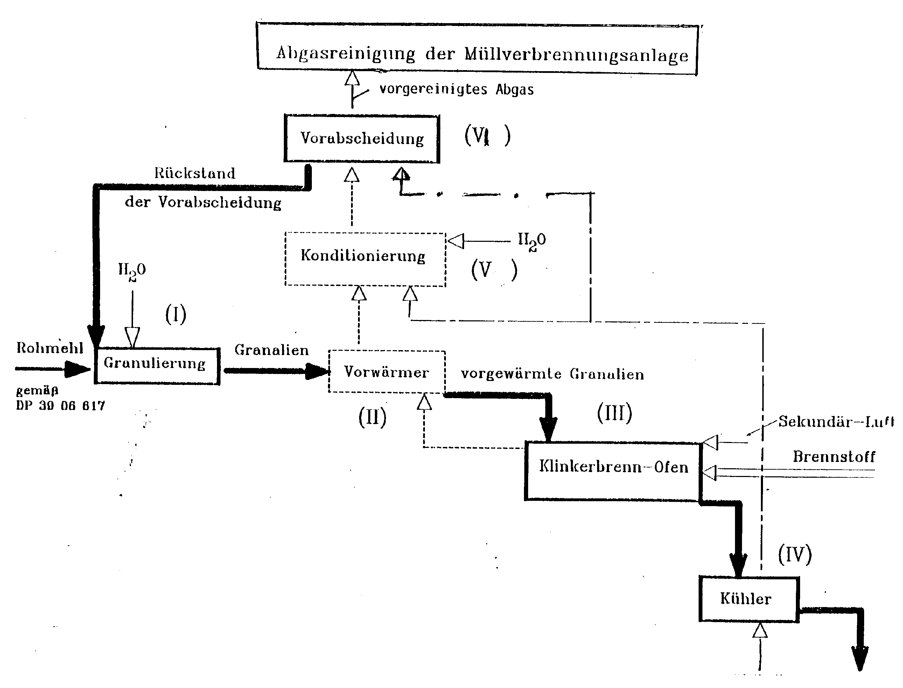

## Patentansprüche

1. Verfahren zur Herstellung eines verwertbaren oder deponiefähigen Produktes mit geringer Eluierbarkeit durch Wasser aus halogenidhaltigen Rückständen aus der Abgasreinigung, bei dem man die halogenidhaltigen Rückstände als Bestandteile eines Rohmehls mit einem CaO/SiO₂-Verhältnis zwischen 1,7 und 3,4 zur Herstellung von Chlorosilikaten einer thermischen Behandlung unterwirft nach Patent DE-C-39 06 617, **dadurch gekennzeichnet**, daß die bei der thermischen Behandlung zur Chlorosilikatherstellung anfallenden Abgase vorgereinigt und dann der Abgasreinigung einer Müllverbrennungsanlage zugeführt werden und daß die bei der Vorreinigung anfallenden Rückstände dem Rohmehl zugemischt werden.

2. Verfahren nach Anspruch 1, **dadurch** **gekennzeichnet**, daß die Abgase durch ein Trockensorptionsverfahren unter Verwendung von Kalkhydrat als basisches Reagenz vorgereinigt werden.

3. Verfahren nach Anspruch 1 oder 2, **dadurch** **gekennzeichnet**, daß in der Vorreinigungsstufe die Rückstände aus den Abgasen vor deren Eintritt in die Abgasreinigung der Müllverbrennungsanlage durch mechanische Filter, wie Schlauchfilter, oder durch Elektrofilter abgetrennt und vollständig dem Rohmehl zugeführt werden.

4. Verfahren nach einem der Ansprüche 1 bis 3, **dadurch gekennzeichnet**, daß die Abgase vor ihrem Eintritt in die Vorreinigungsstufe zur Temperaturabsenkung einer Gaskonditionierung unterworfen werden.

5. Verfahren nach Anspruch 4, **dadurch** **gekennzeichnet**, daß die Temperaturabsenkung in der Gaskonditionierungsstufe durch Eindüsen von Wasser vorgenommen wird.

## Claims

1. Process for the production of a product which may be used or disposed of in landfills with low water elutability from waste gas purification residues containing halides, in which the residues containing halides are subjected to thermal treatment according to patent DE-C-39 06 617 as constituents of a raw meal with a CaO/SiO₂ ratio between 1.7 and 3.4 for the production of chlorosilicates, characterised in that the waste gases arising from the thermal treatment for chlorosilicate production are precleaned and then introduced into the waste gas purification stage of a refuse incinerator and that the residues arising from precleaning are mixed into the raw meal.

2. Process according to claim 1, characterised in that the waste gases are precleaned by a dry sorption process using hydrated lime as basic reagent.

3. Process according to claim 1 or 2, characterised in that in the precleaning stage the residues from the waste gases are separated out by mechanical filters, such as bag filters, or by electrical precipitators before the waste gases enter the waste gas purification stage of the refuse incinerator, and the residues are added in their entirety to the raw meal.

4. Process according to one of claims 1 to 3, characterised in that, before entering the precleaning stage, the waste gases are conditioned to reduce their temperature.

5. Process according to claim 4, characterised in that the temperature reduction in the gas conditioning stage is achieved by means of water jets.

## Revendications

1. Procédé de fabrication d'un produit récupérable ou susceptible d'être mis en décharge, à faible caractéristique d'élution dans de l'eau, à partir de résidus contenant des halogénures provenant du nettoyage d'effluents gazeux, procédé selon lequel on soumet à un traitement thermique les résidus contenant les halogénures, comme constituants d'une farine brute ayant un rapport CaO/SiO₂ compris entre 1,7 et 3,4 pour fabriquer des chlorosilicates, selon le document DE-C-39 06 617, procédé caractérisé en ce que l'on effectue un nettoyage préalable des effluents gazeux provenant du traitement thermique pour la fabrication des chlorosilicates, puis on les fournit à une épuration de gaz d'échappement d'une installation d'incinération d'ordures et on ajoute les résidus du nettoyage préalable, à la farine brute.

2. Procédé selon la revendication 1, caractérisé en ce qu'on effectue le nettoyage préalable des effluents gazeux par un procédé de sorption à sec en utilisant de l'hydrate de chaux comme réactif basique.

3. Procédé selon la revendication 1 ou 2, caractérisé en ce que, dans l'étape de pré-nettoyage, on sépare les résidus des effluents gazeux avant leur entrée dans le nettoyage des gaz de l'installation d'incinération d'ordures, dans des filtres mécaniques tels que des filtres à manche ou des électro-filtres et on les fournit complètement à la farine brute.

4. Procédé selon l'une des revendications 1 à 3, caractérisé en ce qu'avant leur entrée dans l'étape de pré-nettoyage, on soumet les effluents gazeux à un conditionnement gazeux pour abaisser la température.

5. Procédé selon la revendication 4, caractérisé en ce qu'on abaisse la température des gaz dans l'étape de conditionnement de gaz par injection d'eau.
